# EUROPEAN PATENT APPLICATION

(11) **EP 1 626 349 A1**
(43) Date of publication of application: **15.02.2006**
(21) Application number: 04292020.7
(22) Date of filing: 10.08.2004
(51) Int. Cl.: G06F 17/30

(54) **User interface for smart card applications**

(71) Applicant: Axalto SA, 92120 Montrouge (FR)
(72) Inventor: Chaumartin, Nicolas c/o Axalto SA, 92120 Montrouge (FR); Mahalal, Ilan c/o Axalto SA, 92120 Montrouge (FR); Abellan Sevilla, Jorge c/o Axalto SA, 92120 Montrouge (FR)

(57) **Abstract**

For an application running on a smart card, a user interface to be displayed on a terminal device provided. Hypertext pages are dynamically created by the application running on the smart card and served to a browser running on the terminal device.

## Description

### BACKGROUND OF THE INVENTION

### Field of the invention

The present invention generally relates to applications that are executed on the microcontroller of an Integrated Circuit card (IC card or "smart card"), and more specifically to mechanisms that allow to provide a browser user interface for applications running on a smart card.

Throughout this document, an application running on a smart card will be called a "smart card application". The term "browser" denotes a computer program capable of displaying hypertext pages.

### Background art

Smart cards are intrinsically secure computing platforms ideally suited for providing enhanced security and privacy functionality to applications. They are used, e.g. in mobile telephones and other communication devices, as a place to store user subscription data, user private keys and other private or confidential data. They provide a means for secure storage and computational facilities for sensitive information such as private keys and key fragments, passwords and shared secrets, authorisations and permissions etc.

At the same time, many smart cards provide an isolated processing facility capable of using this information without exposing it within the host environment, where it is at potential risk from hostile code (viruses, Trojan horses etc.). This becomes critically important for operations such as the generation of digital signatures for personal identification using private keys, network authentication based on shared secrets, portable permissions for use in off-line situations etc.

More and more smart cards are presented as a platform able to run applications. By doing so, the applications are embedded within a terminal device but executed in a separated and secured environment. In order to facilitate the implementation of such applications, the smart cards carry runtime environments like JavaCard or .net.

Smart card applications may have user interfaces that are displayed on the terminal device connected to the smart card. For communication with the program displaying the user interface, current smart card applications employ an asynchronous protocol defined in the ISO 7816 standards, where APDU (Application Protocol Data Unit) commands carry application level information. This protocol is used e.g. in mobile telephones, as the GSM and 3GPP standards conform to it.

However, it would be advantageous to use, for generation, transmission and display of the user interface of a smart card application, standard tools and standard applications as they are used outside the smart card world. Such standard tools are e.g. the ones for generation or displaying hypertext pages like HTML (Hypertext Markup Language) or xHTML (extensible Hypertext Markup Language) pages, and for transmission or reception of hypertext pages using the Hypertext Transfer Protocol (HTTP), like an Internet browser.

In fact, smart cards have already been given HTTP communication capabilities. For example, smart cards can host an HTTP server and serve static xHTML pages to a remote xHTML browser, i.e. a browser that is run on a device different from the smart card. A static xHTML page is a predefined, invariable page which is - in this case - stored on the smart card. The remote browser requests the predefined xHTML page, and the HTTP server (webserver) finds the page on the smart card and delivers it to the browser.

However, building user interfaces with static pages is very tedious and requires a lot of memory space, since every possible display configuration of the user interface needs to be pre-generated and stored on the smart card.

Furthermore, in many client/server protocols, e.g. in HTTP, communication between the client side (e.g. a browser displaying an xHTML page) and the server side (e.g. a webserver running on the smart card) follows a request/response scheme, the request always being issued by the client side. When such a protocol is used for communication between the smart card application and the browser, there must be a mechanism that allows the application to react to incoming browser requests.

Next, when xHTML browsers are introduced for displaying the user interface of smart card applications, it is desirable to reuse the existing applications, to allow for a smooth migration.

However, most of the applications running on a smart card are of "state machine" type. This means that the application being executed is always in one of several discrete states. Also the user interface of the smart card application is in one of several discrete states.

The user interfaces of current smart card applications are displayed on customised programs using APDU commands to notify the smart card application whenever the state of the user interface changes. The smart card application thus is always synchronised with its user interface.

This is not the case any more when the user interface is displayed on a standard tool like an xHTML browser communicating with the smart card application via HTTP.

In many cases, for changing its state, the browser needs an input from the smart card application, e.g. a new xHTML page. It issues a request which is communicated to the smart card application, the smart card application thus being able to track the change of state on the browser and to change its own state accordingly.

In other cases however, the browser needs no input from the smart card application to change the state of the user interface, e.g. when the user presses the "back" button. The browser consequently does not issue a request, and the smart card application cannot change its state accordingly. The application and its user interface get de-synchronised.

The de-synchronisation may cause an error when the browser issues the next request. The smart card application may be in a state where it does not expect such a request and may therefore not be able to correctly answer the request.

### SUMMARY OF THE INVENTION

It is therefore an object of the invention to provide a method allowing the use of standard tools for creating, transmitting and displaying the user interface of a smart card application. In particular is it an object of the invention to provide a mechanism that allows a smart card application to react to requests issued by a standard tool displaying its user interface, and to provide a method for synchronisation between a smart card application and its user interface when the latter is displayed on a standard tool.

This object is achieved by the method and the device as defined in independent claims 1 and 12. Further preferred embodiments are defined in the dependent claims.

According to a preferred embodiment of the invention, the object is achieved by providing, for an application running on a smart card, a user interface to be displayed on a terminal device, comprising the steps of dynamic creation of hypertext pages by said application running on said smart card and serving of said hypertext pages to a browser running on said terminal device.

A browser is a standard tool for displaying hypertext pages. Dynamic pages are not readily predefined but created at the time when they are requested. One advantage of dynamically created pages is that the pages can be created in a very flexible way. Another advantage is that they do not have to be pre-generated and stored on the smart card, and therefore memory space on the smart card is saved.

According to a further preferred embodiment of the invention, said hypertext pages are HTML or xHTML pages.

This has the advantage that the standard tools for creation, transmission and display of HTML and xHTML pages can be used.

According to a further preferred embodiment of the invention, said application is triggered in reaction to a request from said browser, said request communicating a resource identifier identifying the application to be triggered.

This allows to specify within a resource identifier comprised by a client request the smart card application from which a resource, e.g. a dynamically created xHTML page, is to be retrieved. When the request is received on the smart card side, the appropriate smart card application can be triggered to serve the request.

In another preferred embodiment of the invention said resource identifier is a Uniform Resource Identifier.

This facilitates for the communication between the browser and the smart card the use of standard Internet protocols where Uniform Resource Identifiers are employed to identify requested resources.

According to another preferred embodiment of the invention, said client request is an HTTP request containing said Uniform Resource Identifier within its request line.

This allows for the communication between the browser and the smart card the use of HTTP, which is most suitable for the transmission of hypertext pages.

In a further preferred embodiment of the invention, state information is communicated within said request, said state information being used to trigger said application starting from the appropriate state.

This allows to synchronise the smart card application and its remote client by taking the smart card application to a state in which it is able to correctly serve the request.

According to a further preferred embodiment of the invention, said state information identifies the state starting from which said application is to be triggered.

This simplifies on the server side (on the smart card) the process of identifying the state starting from which the smart card application is to be triggered.

According to another preferred embodiment of the invention, said state information indicates the state of said browser.

By doing so, the browser does not need to know the appropriate smart card application state.

In a further preferred embodiment of the invention said state information is contained within said resource identifier.

This has the advantage that, for communicating the state information, no extra parameter needs to be added to the request, which already comprises a resource identifier.

According to another preferred embodiment of the invention, said resource identifier is a Uniform Resource Identifier comprising a query part and said state information is contained within said query part.

This has the advantage that the other components of the Uniform Resource Identifier, in particular the ones serving for identification of the requested resource, can remain unchanged.

Another preferred embodiment of the invention is a computer program element comprising computer program code means to make a smart card execute the method according to the invention.

A further preferred embodiment of the invention is a smart card comprising an application and said computer program element.

### BRIEF DESCRIPTION OF THE DRAWINGS

The foregoing and other objects, aspects and advantages of the invention will be better understood from the following detailed description of the preferred embodiments of the invention made with reference to the drawings, in which:
- Fig. 1: is a schematic diagram showing the architecture of a preferred embodiment of the invention;
- Fig. 2: is a schematic diagram demonstrating how de-synchronisation between a smart card application and its remote user interface can occur;
- Fig. 3: is a schematic diagram demonstrating how a smart card application and its remote user interface are re-synchronised according to a preferred embodiment of the invention.

### DETAILED DESCRIPTION OF A PREFERRED EMBODIMENT OF THE INVENTION

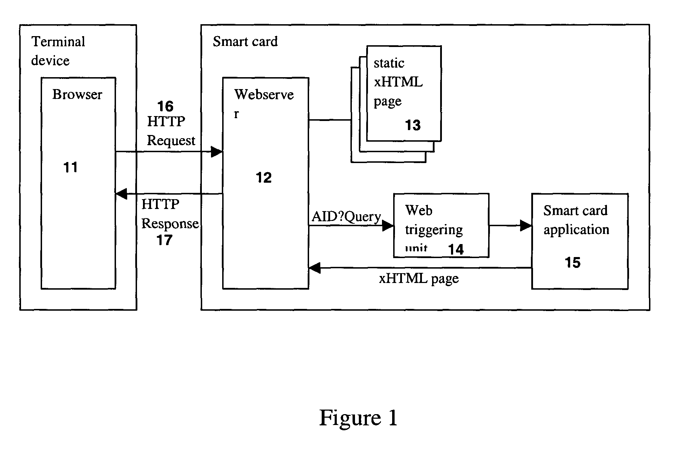

Referring now to the drawings, Figure 1 shows a smart card hosting a webserver 12 that is able to receive requests 16 from remote clients, like a xHTML browser 11 running on a terminal device, and sending a response 17 to the client. HTTP is used for communication between the browser 11 and the webserver 12. Current smart cards host webservers that serve static xHTML pages 13.

According to the invention, the browser 11, in response 17 to a request 16 is not sent a static HTML or xHTML page by the webserver 12, but a page which is dynamically created by a smart card application 15. That means that the webserver 12 does not send a page to the browser 11 that was readily pre-generated and stored on the smart card, but a page that was created by the smart card application 15 in reaction to the request 17. This allows the page to be flexibly built according to the respective state of the smart card application 15, which makes HTML or xHTML pages suited for forming the basis of a user interface of the application.

Next, the mechanism to trigger the appropriate smart card application 15 in reaction to the client request 16 will be described.

It has to be borne in mind that a smart card may host several applications. The application 15, from which the dynamically created resource (like an xHTML page) is requested, must therefore be specified in the client request 16. Many protocols use Uniform Resource Identifiers (URI) for specifying a requested resource (for a detailed description of URI see RFC 2396 "Uniform Resource Identifiers (URI): Generic Syntax"). For example, every HTTP request contains a URI in its request line (for a detailed description of HTML version 1.1 see RFC 2616). According to the invention, the smart card application 15 from which the resource is requested is identified using a URI comprised by the client request 16. The URI may e.g. contain an application ID (AID).

On the smart card side, the webserver recognises that the request 16 is not directed to a static resource, but to a smart card application. In the example architecture of Fig. 1, a part of the URI, including the application ID, is passed to a web triggering unit 14, which in turn triggers the smart card application identified by the application ID. It goes without saying that the web triggering unit 14 does not need to be a separate component in the smart card architecture. The appropriate smart card application 15 could also be triggered, e.g., by the webserver 12, based on the application ID contained by the URI.

The smart card application 15, when triggered, performs whatever computation is necessary to create the requested resource (e.g. an xHTML page) and passes the created resource to the webserver 12, which in turn delivers the resource to the client 11, in the example of Fig. 1 via an HTTP response 17.

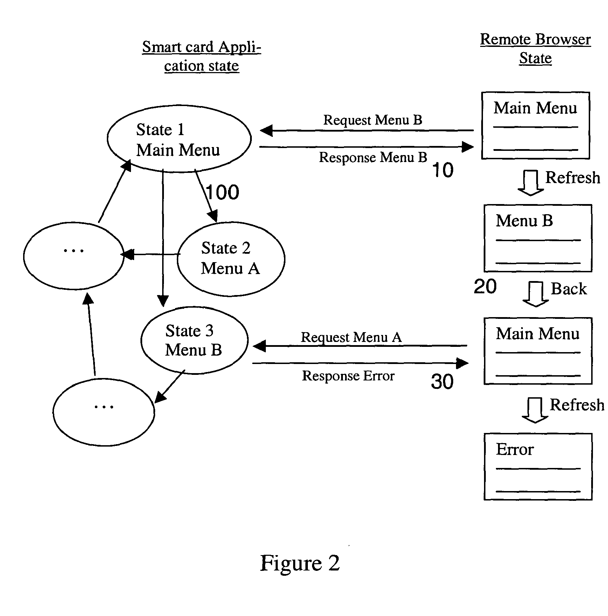

Referring now to Fig. 2, the problem will be illustrated which arises when a browser user interface is used in conjunction with an existing "state machine" type smart card application.

On the left hand side of Fig. 2, an example of a "state machine" type application running on a smart card is given, depicting the different states of the application and the possible transitions between these states. On its right hand side it shows the sequence of states the remote client runs through throughout the example. The remote client is a browser displaying xHTML pages and representing the user interface of the smart card application.

At the beginning the application is in State 1, corresponding to the Main Menu, and also the remote browser displays the Main Menu. The smart card application and its user interface thus are synchronised.

In a first step 10 the user chooses item B from the Main Menu. The browser consequently sends a request to the server side, e.g. an HTTP request which is received by a webserver (not shown) running on the smart card, the webserver passing the request to the smart card application. The application sends a response to the remote browser, in general via a webserver (not shown). This response may e.g. contain an xHTML page comprising the requested Menu B. The smart card application then changes its state to State 3, corresponding to Menu B.

The remote browser receives the xHTML page comprising Menu B, and displays the page (Refresh), changing its state to Menu B. The smart card application and its user interface thus remain synchronised.

In a second step 20 the user instead of choosing an item from Menu B presses the "Back" button. Consequently, the remote browser displays the Main Menu again, changing its state back to Main Menu. However, since the xHTML page corresponding to the Main Menu is already known to the browser, the latter does not need to request it from the smart card application. The application not receiving a request, it is not aware of the fact that its user interface has changed state, and remains itself in State 3, corresponding to Menu B. The application and its user interface are now de-synchronised.

In a third step 30 the user chooses item A from the Main Menu. The browser consequently issues a request requesting Menu A. The smart card application, which is in State 3 (corresponding to Menu B), cannot serve this request, since there is no transition from State 3 (Menu B) to State 2 (Menu A).

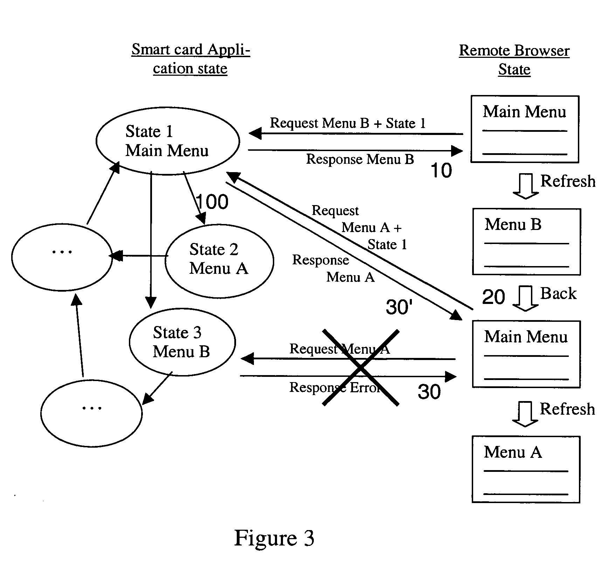

Fig. 3 demonstrates how the smart card application is re-synchronised with its user interface according to a preferred embodiment of the invention.

Like in Fig. 2, both the smart card application and the remote browser start off in State 1 (Main Menu). In the first step 10 the browser requests and displays Menu B, and in the second step 20 the user presses the "Back" button and the browser changes back to "Main Menu", the smart card application and its user interface then being de-synchronised.

However, in addition to the specification of the requested resource, in Fig. 3 the client requests also comprise state information. Using this state information at the server side, the smart card application can be triggered from the appropriate state, which means that the smart card application, prior to responding the request, is brought into a state starting from which it is able to correctly serve the request.

Of course, the state information conveyed with the request does not have to directly indicate the state from which the smart card application is to be triggered. It can e.g. indicate the state of the client issuing the request. The state from which the smart card application has to be triggered will in generally be deducible from the client state. In the example of Fig. 3, every client state has a corresponding smart card application state and vice versa.

One can observe that in the first step 10 the client request comprises the requested resource (Menu B) and the state from which the smart card application is to be triggered (State 1). Since the application is still synchronised with its user interface it is already in State 1 and can therefore serve the request without previously being taken into another state.

This is different in the third step 30, 30', where the smart card application and its user interface are de-synchronised. In addition to the requested resource (Menu A), the client request communicates the information that the smart card application is to be triggered from State 1. Since the application is in State 3, it has to be taken into State 1 prior to serving the request. In the example architecture of Fig. 1, this can be performed by the web triggering unit 14.

In Fig. 3, one can see that State 1 is in fact an appropriate state, because there is an arrow 100 indicating a possible transition between State 1, corresponding to the Main Menu, and State 2, corresponding to Menu A, the requested resource.

In a preferred embodiment of the invention the state information communicated with the client request is contained within the URI. By doing so, the state information advantageously can be communicated without adding an extra element to be carried by the request, thus without altering the format and the syntax of the request.

A subset of URI have a common syntax for representing hierarchical relationships within the namespace (see RFC 2396, section 3.):
<scheme>://<authority><path>?<query>

Each of the components, except <scheme>, may be absent from a particular URI. While the <authority> and the <path> components serve to identify the requested resource, the <query> component is a string of information to be interpreted by the resource. In a preferred embodiment of the invention, when URI with the above syntax are employed, the state information communicated with the client request is contained within the <query> component of the URI. By doing so, the state information advantageously can be conveyed without altering the scheme for identifying resources.

In a further preferred embodiment of the invention, the protocol used for communication between the client and the smart card is HTTP, which is ideally suited to transfer hypertext pages like HTML or xHTML pages.

In this case, a client request communicating state information according to the invention is an HTTP request. An HTTP request message includes, within the first line of that message, the method to be applied to the resource, a URI, and the protocol version in use:
<method> <request-uri> <http-version>

For example, if a client wants to retrieve a resource, it can use the "GET" method:
GET http://localsmartcard/ApplicationID/MenuB HTTP/1.1

In the example, <method> is "GET", <request-uri> is
"http://localsmartcard/ApplicationID/MenuA", and <http-version> is "HTTP/1.1". Within the request URI, <scheme> is "http" and <path> is
"localsmartcard/ApplicationID/MenuA", the path identifying the resource the client wants to retrieve. This requested resource is Menu A, which is to be dynamically created by a smart card application identified by ApplicationID.

According to the teaching of the invention, the <query> component of the URI cab be used to also communicate the state from which the application is to be triggered. For example, if the smart application is to be triggered from State 1, the request line is:
GET http://localsmartcard/AppletID/MenuB?State1 HTTP/1.1

When in Fig. 1 the webserver 12 on the smart card parses the URI, the query is identified and passed to the web triggering unit 14. Using this information, the web triggering unit 14 triggers the application 15 starting from the appropriate state.

## Claims

1. Method of providing, for an application running on a smart card, a user interface to be displayed on a terminal device, comprising the steps of dynamic creation of hypertext pages by said application running on said smart card and
serving of said hypertext pages to a browser running on said terminal device.

2. Method according to claim 1, **characterised in that** said hypertext pages are HTML or xHTML pages.

3. Method according to claim 1 or 2, **characterised in that**, for creation of said hypertext pages, said application is triggered in reaction to a request from said browser, said request communicating a resource identifier identifying the application to be triggered.

4. Method according to claim 3, **characterised in that** said resource identifier is a Uniform Resource Identifier.

5. Method according to claim 4, **characterised in that** said client request is an HTTP request containing said Uniform Resource Identifier within its request line.

6. Method according to one of claims 3 to 5, **characterised in that** state information is communicated within said request, said state information being used to trigger said application starting from the appropriate state.

7. Method according to claim 6, **characterised in that** said state information identifies the state starting from which said application is to be triggered.

8. Method according to claim 6, **characterised in that** said state information indicates the state of said browser.

9. Method according to one of claims 6 to 8, **characterised in that** said state information is contained within said resource identifier.

10. Method according to claim 9, **characterised in that** said resource identifier is a Uniform Resource Identifier comprising a query part and **in that** said state information is contained within said query part.

11. Computer program element comprising computer program code means to make a smart card execute the method according to claims 1 to 10.

12. Smart card comprising an application and a computer program element according to claim 11.
